# EUROPÄISCHE PATENTSCHRIFT

(11) **EP 1 447 279 B1**
(45) Veröffentlichungstag und Bekanntmachung des Hinweises auf die Patenterteilung: **26.07.2006**
(21) Anmeldenummer: 04001407.8
(22) Anmeldetag: 23.01.2004
(51) Int. Cl.: B60R 9/045

(54) **Dachlastenträger**
Vehicle roof carrier
Porte-bagages de toit

(30) Priorität: 14.02.2003 DE 10307230
(43) Veröffentlichungstag der Anmeldung: 18.08.2004
(73) Patentinhaber: ORIS FAHRZEUGTEILE HANS RIEHLE GmbH, 71696 Möglingen (DE)
(72) Erfinder: Nägele, Karl, 74321 Bietigheim-Bissingen (DE); Berrer, Jürgen, 71720 Oberstenfeld (DE); Eisenschmidt, Jens, 75181 Pforzheim (DE); Rimmelspacher, Bernhard, 76287 Rheinstetten (DE); Riehle, Jörg, 71679 Asperg (DE)
(74) Vertreter: Hoeger, Stellrecht & Partner Patentanwälte

(56) Entgegenhaltungen:
- EP-A- 0 487 132
- EP-A- 0 606 852
- EP-A- 0 681 943
- WO-A-96/22901
- DE-A- 4 440 922
- DE-A- 10 163 078

## Beschreibung

Die Erfindung betrifft einen Dachlastenträger für ein Dachrelingsystem nach dem Oberbegriff des Anspruchs 1. Ein derartiger Dachlastenträger ist aus der WO 96/22901 A1 bekannt.

Ein weiterer Dachlastenträger ist beispielsweise aus der EP 0 623 490 bekannt.

Der Erfindung liegt die Aufgabe zugrunde, einen Dachlastenträger der gattungsgemäßen Art derart zu verbessern, daß er im Bereich der Fixiereinrichtungen optisch ansprechend gestaltet und gegen Verschmutzung gesichert ist.

Diese Aufgabe wird erfindungsgemäß duch einen Dachlastenträger mit den Merkmalen des Anspruchs 1 gelöst.

Durch das Anlegen der Fixiereinrichtungen an einer Seite des Querträgers ist eine einfache Montage der Fixiereinrichtungen möglich ist und andererseits kann die Verbindung zwischen den Fixiereinrichtungen und dem Querträger spielfrei gestaltet werden.

Der Vorteil dieser Lösung im Gegensatz zu der EP 0 623 490 ist darin zu sehen, daß bei der erfindungsgemäßen Lösung die Fixiereinrichtung nicht optisch unästhetisch neben dem an sich ein formschönes Design aufweisenden Querträger angeordnet ist, sondern daß durch die Abdeckung die Möglichkeit besteht, im Bereich der Fixiereinrichtung eine optisch ansprechende Verbindung zwischen dem Querträger und der Fixiereinrichtung zu schaffen.

Bei dem erfindungsgemäßen Dachlastenträger ist vorgesehen, daß das erste Abdeckteil mit einem zweiten, an der entsprechenden Fixiereinrichtung gehaltenen Abdeckteil durch wechselseitige teilweise Überdeckung so zusammenwirkt, daß eine die Fixiereinrichtung im wesentlichen übergreifende Abdeckung entsteht.

Der Vorteil dieser Lösung ist darin zu sehen, daß durch die beiden Abdeckteile, von denen das erste an dem Endbereich des Querträgers gehalten ist und das zweite an der Fixiereinrichtung gehalten ist, eine besonders günstige Möglichkeit besteht, eine Abdeckung zu realisieren, die die Fixiereinrichtung im wesentlichen übergreift und somit die Möglichkeit schafft, den Dachlastenträger im Bereich der Fixiereinrichtung optisch ansprechend zu gestalten und außerdem noch die Fixiereinrichtung gegen Verschmutzung zu sichern.

Um die Fixiereinrichtungen definiert ausgerichtet relativ zum Querträger verschieben zu können, ist vorzugsweise vorgesehen, daß die Fixiereinrichtungen relativ zum Querträger in einer Längsführung geführt zwischen den innerhalb des festgelegten Bereichs liegenden Längspositionen verschiebbar sind.

Der Vorteil dieser Lösung ist somit darin zu sehen, daß zwar eine Verschiebbarkeit der Fixiereinrichtungen durch die Längsführung gewährleistet ist, daß jedoch die Längsführung vorzugsweise lediglich eine Verschiebbarkeit zwischen Längspositionen innerhalb eines festgelegten Bereichs gewährleistet, um selbst bei einem Lösen der Festlegung der Fixiereinrichtungen relativ zum Querträger zu verhindern, daß sich die Fixiereinrichtungen vom Querträger vollständig lösen.

Besonders günstig ist es, wenn die Fixiereinrichtungen gegenüber dem Querträger stufenlos in verschiedene innerhalb des Bereichs liegende Längspositionen verschiebbar und in jeder Längsposition gegenüber dem Querträger festlegbar sind, so daß eine stufenlose Anpassung der Fixiereinrichtungen an unterschiedliche Abstände zwischen den Dachrelingträgern möglich ist.

Hinsichtlich der Festlegung der Fixiereinrichtungen sind die unterschiedlichsten Möglichkeiten denkbar. Beispielsweise wäre es denkbar, im Hinblick auf eine variable und insbesondere stufenlose Einstellbarkeit der Längsposition der Fixiereinrichtungen relativ zum Querträger ist es jedoch besonders günstig, wenn die Fixiereinrichtungen in der Längsrichtung kraftschlüssig am Querträger fixierbar sind.

Die Fixiereinrichtungen können in unterschiedlicher Art und Weise am Querträger gehalten sein. Beispielsweise wäre es denkbar, die Fixiereinrichtungen dadurch am Querträger zu halten, daß diese den Querträger zumindest teilweise oder vollständig um- oder übergreifen oder in den Querträger eingreifen.

Eine besonders günstige Lösung sieht jedoch vor, daß die Fixiereinrichtungen durch den Querträger durchsetzende Halteelemente an dem Querträger gehalten sind.

Vorzugsweise sind dabei die Halteelemente als Spannelemente ausgebildet, mit welchen eine kraftschlüssige Festlegung der Fixiereinrichtungen in der Längsrichtung möglich ist.

Zweckmäßigerweise sind dabei die Halteelemente in Längsführungselementen der Längsführungen geführt, so daß die Halteelemente und die Längsführungselemente zusammen die Längsführung bilden und somit die Halteelemente der Längsführungen gleichzeitig zum Festlegen der Fixiereinrichtungen relativ zum Querträger dienen.

Das erste Abdeckteil überdeckt vorzugsweise eine Stirnseite des Querträgers.

Eine besonders günstige Lösung sieht vor, daß das erste Abdeckteil in jeder der Längspositionen der entsprechenden Fixiereinrichtung eine Betätigung der Spanneinrichtung dieser Fixiereinrichtung verhindert.

Damit erhält das erste Abdeckteil noch eine zusätzliche Funktion, nämlich diejenige, eine Diebstahlsicherung für den Dachlastenträger zu bilden, da durch die Verhinderung der Betätigung der Spanneinrichtung ein unbefugtes Lösen des Dachlastenträgers von den Dachrelingträgern nicht möglich ist.

Ein Verhindern der Betätigung der Spanneinrichtung läßt sich bei einem Ausführungsbeispiel der erfindungsgemäßen Lösung günstigerweise dadurch erreichen, daß das erste Abdeckteil so geformt und angeordnet ist, daß es in jeder Längsposition der entsprechenden Fixiereinrichtung ein Betätigungselement der Spanneinrichtung übergreift, um somit ein Betätigen der Spanneinrichtung zu verhindern.

Besonders zweckmäßig ist es dabei, wenn das erste Abdeckteil so ausgebildet ist, daß es in jeder Längsposition der entsprechenden Fixiereinrichtung eine Seite der Fixiereinrichtung übergreift, an welcher das Betätigungselement der Spanneinrichtung angeordnet ist.

Besonders günstig ist es, wenn das erste und das zweite Abdeckteil teleskopartig zusammenwirken.

Vorzugsweise ist dabei vorgesehen, daß die Abdeckung die jeweilige Fixiereinrichtung in jeder Längsposition im wesentlichen übergreift.

Vorzugsweise wirken dabei das erste Abdeckteil und das zweite Abdeckteil so zusammen, daß die Abdeckung eine je nach Längsposition der Fixiereinrichtung variable Größe aufweist.

Beispielsweise ist dabei die Abdeckung so ausgebildet, daß in der maximal innenliegenden Längsposition der Fixiereinrichtung relativ zum Querträger die Abdeckung die maximale Größe aufweist, während die Abdeckung eine minimale Größe aufweist, wenn die Fixiereinrichtung relativ zum Querträger in der maximal außenliegenden Längsposition angeordnet ist.

Das erste Abdeckteil könnte entsprechend den vorstehend beschriebenen Ausführungsformen grundsätzlich beliebig gestaltet sein, solange die angegebenen Vorteile erreichbar sind.

Beispielsweise könnte das Abdeckteil im einfachsten Fall als eine einen Zugang zum Betätigungselement der Spanneinrichtung verhindernde Platte ausgebildet sein.

Eine konstruktiv und hinsichtlich der Erreichbarkeit der Vorteile besonders günstige Lösung sieht vor, daß das erste Abdeckteil einen haubenförmigen Bereich aufweist.

Dieser haubenförmige Bereich schafft die Möglichkeit, in optimaler Weise die jeweilige Fixiereinrichtung zumindest teilweise abzudecken.

Besonders günstig ist dieser haubenförmige Bereich dann, wenn in jeder Längsposition der Fixiereinrichtung das Betätigungselement der Spanneinrichtung von dem haubenförmigen Bereich übergriffen wird.

Der haubenförmige Bereich hat außerdem den Vorteil, daß dieser die Möglichkeit eröffnet, die Fixiereinrichtung je nach Längsposition unterschiedlich weit in den haubenförmigen Bereich eintauchen zu lassen, so daß durch diesen haubenförmigen Bereich in jeder Längsposition zumindest eine teilweise, allerdings entsprechend der Längsposition variierende Abdeckung der Fixiereinrichtung möglich ist.

Besonders im Zusammenhang mit dem zweiten Abdeckteil schafft der haubenförmige Bereich die Möglichkeit, die Fixiereinrichtung mitsamt dem an diesem gehaltenen zweiten Abdeckteil je nach Längsposition unterschiedlich weit in den haubenförmigen Bereich eingreifen zu lassen.

So liegt beispielsweise bei der maximal innenliegenden Längsposition der Fixiereinrichtung ein minimaler Eingriff der jeweiligen Fixiereinrichtung und des zweiten Abdeckteils in den haubenförmigen Bereich des ersten Abdeckteils vor, während bei der maximal außenliegenden Längsposition der Fixiereinrichtung die Fixiereinrichtung und das zweite Abdeckteil mit dem größtmöglichen Teilbereich in den haubenförmigen Bereich eingreifen.

Um keine Behinderung der Montage des Dachlastenträgers durch das erste Abdeckteil in Kauf nehmen zu müssen, ist vorzugsweise vorgesehen, daß das erste Abdeckteil lösbar an dem Querträger gehalten ist.

Vorzugsweise ist dabei das erste Abdeckteil mit einem Schloß lösbar an dem Querträger gehalten, so daß bei geöffnetem Schloß das erste Abdeckteil lösbar und vom Querträger abnehmbar ist, während bei geschlossenem Schloß das erste Abdeckteil fest mit dem Querträger verbunden ist.

Die erfindungsgemäßen Vorteile werden in besonders augenfälliger Art und Weise dann erreicht, wenn die Spanneinrichtungen der Fixiereinrichtungen außerhalb des Querträgers angeordnet sind, so daß die Betätigung der Spanneinrichtungen völlig unabhängig von dem Querträger erfolgen kann.

Vorzugsweise sind dabei die Spanneinrichtungen zwischen Spannbereichen der Fixierelemente und dem Querträger angeordnet und dabei insbesondere bei der Montage des erfindungsgemäßen Dachlastenträgers optimal zugänglich.

Eine besonders günstige Lösung sieht vor, daß die Fixiereinrichtungen vollständig außerhalb des Querträgers liegen und somit als Einheiten hergestellt werden können, die völlig unabhängig vom Querträger, insbesondere auch von der Form desselben, sind, wobei eine kostengünstige Herstellung beispielsweise von Dachlastenträgern mit unterschiedlichem Querträger, jedoch identischen Fixiereinrichtungen möglich ist.

Hinsichtlich des Aufbaus der Fixiereinrichtungen selbst wurden bislang keine näheren Angaben gemacht. So sieht ein vorteilhaftes Ausführungsbeispiel vor, daß die Fixiereinrichtungen jeweils einen Lagerkörper aufweisen, der mit einer Basis an dem Querträger anliegt, so daß eine einfache gegenseitige Abstützung zwischen den Fixiereinrichtungen und dem Querträger realisierbar ist.

Ferner können prinzipiell die Fixiereinrichtungen mit zwei gegeneinander beweglichen Fixierelementen versehen sein. Um eine feste Verankerung der Fixiereinrichtungen an dem jeweiligen Dachrelingträger zu erreichen, ist vorzugsweise vorgesehen, daß die Fixiereinrichtungen ein feststehendes Fixierelement und ein gegenüber diesem bewegbares Fixierelement aufweisen.

Vorzugsweise ist dabei das feststehende Fixierelement an dem Lagerkörper der jeweiligen Fixiereinrichtung gehalten.

Ferner ist zweckmäßiger Weise das bewegbare Fixierelement an dem Lagerkörper bewegbar gelagert.

Um in einfacher Weise ein Festlegen des jeweiligen Abschnitts des Dachrelingträgers zwischen den Fixierelementen erreichen zu können, ist vorzugsweise vorgesehen, daß das bewegbare Fixierelement beim Einspannen des jeweiligen Dachrelingträgers mit der Spanneinrichtung relativ zu dem Lagerkörper bewegbar ist.

Das bewegbare Fixierelement kann dabei in unterschiedlichster Art und Weise ausgebildet sein.

So sieht eine vorteilhafte Ausführungsform vor, daß das bewegbare Fixierelement als Schwenkhebel ausgebildet ist, welcher gegenüber dem Lagerkörper um eine Schwenkachse verschwenkbar ist.

Besonders günstig ist es bei dieser Lösung, wenn das bewegbare Fixierelement in eine Montagestellung bewegbar ist, in welcher die Fixierelemente auf den jeweiligen Dachrelingträger aufsetzbar sind, und von der Montagestellung mittels der Spanneinrichtung in eine Spannstellung bewegbar ist.

Eine andere Lösung sieht vor, daß das bewegbare Fixierelement von der Spanneinrichtung lösbar ist und nach Aufsetzen des Dachlastenträgers auf die Dachrelingträger den jeweiligen Dachrelingträger untergreifend mit der Spanneinrichtung verbindbar ist, um die Spannstellung zu erreichen.

Ein derartiges Fixierelement kann dabei ein Fixierbügel oder auch ein Fixierband sein.

Weitere Merkmale und Vorteile der Erfindung sind Gegenstand der nachfolgenden Beschreibung sowie der zeichnerischen Darstellung einiger Ausführungsbeispiele. In der Zeichnung zeigen:

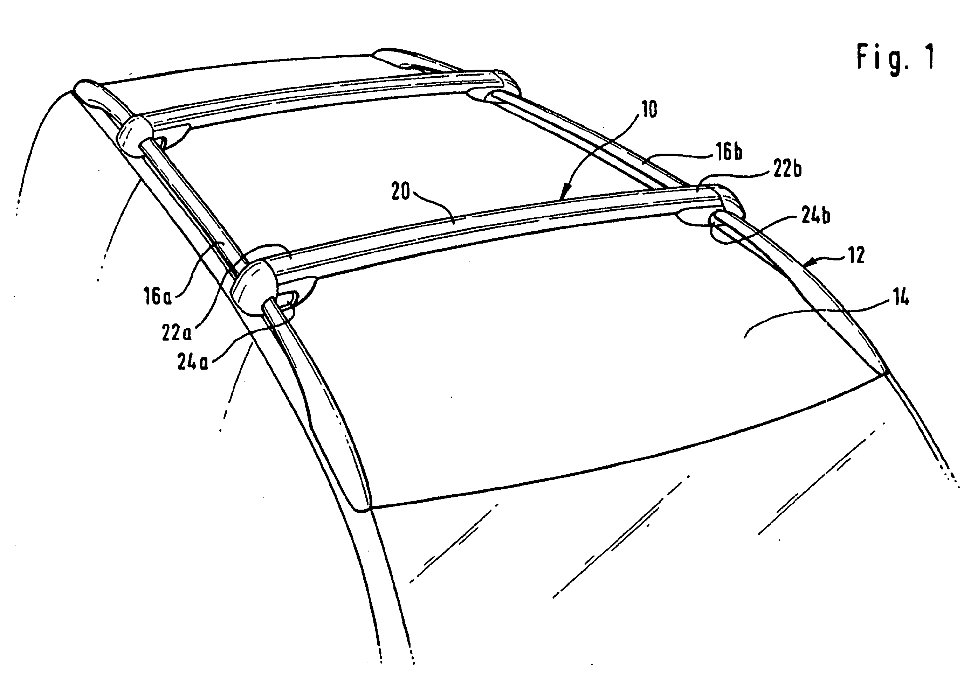

- Fig. 1: eine perspektivische Darstellung eines ersten Ausführungsbeispiels eines erfindungsgemäßen Dachlastenträgers montiert an einem Dachrelingsystem;
- Fig. 2: einen teilweisen Schnitt längs Linie 2-2 durch einen Endbereich eines Querträgers und eine an diesem gehaltene Fixiereinrichtung;
- Fig. 3: einen Schnitt Längs Linie 3-3 in Fig. 2;
- Fig. 4: einen Schnitt längs Linie 4-4 in Fig. 2;
- Fig. 5: eine im Bereich des Querträgers entsprechend Fig. 2 geschnittene Darstellung des ersten Ausführungsbeispiels des erfindungsgemäßen Dachlastenträgers bei Anordnung der Fixiereinrichtung in einer maximal innenliegenden Längsposition relativ zum Querträger und Darstellung einer Abdeckung;
- Fig. 6: eine Darstellung entsprechend Fig. 5 bei Anordnung der Fixiereinrichtung in einer maximal außenliegenden Längsposition relativ zum Querträger;
- Fig. 7: eine Draufsicht von unten in Richtung des Pfeils A in Fig. 6;
- Fig. 8: eine Darstellung ähnlich Fig. 2 eines zweiten Ausführungsbeispiels eines erfindungsgemäßen Dachlastenträgers und
- Fig. 9: eine Darstellung ähnlich Fig. 2 eines dritten Ausführungsbeispiels eines erfindungsgemäßen Dachlastenträgers.

Ein erstes Ausführungsbeispiel eines erfindungsgemäßen Dachlastenträgers 10 für ein Dachrelingsystem 12, umfassend auf einander gegenüberliegenden Seiten eines Fahrzeugdachs 14 angeordnete Dachrelingträger 16a, b, umfaßt einen Querträger 20, an dessen Endbereichen 22a, b Fixiereinrichtungen 24a, b angeordnet sind, mit welchen der Querträger 20 an den Dachrelingträgern 16a, b fixierbar ist.

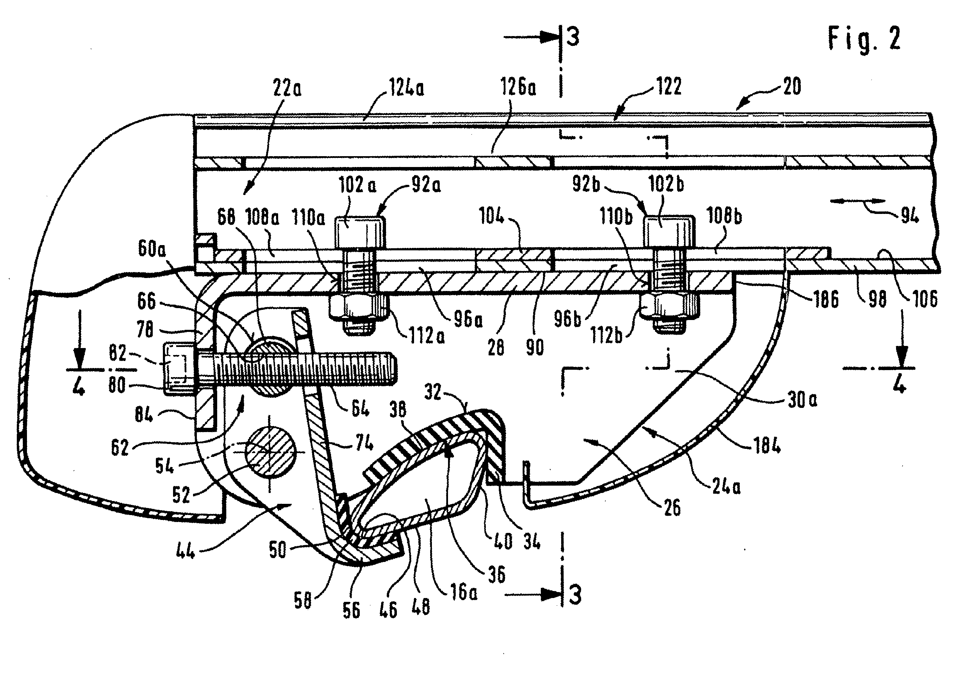

Jede der Fixiereinrichtungen 24a, b umfaßt, wie exemplarisch am Beispiel der Fixiereinrichtung 24a in Fig. 2 dargestellt, einen Lagerkörper 26 ausgebildet als Blechbiegeteil mit einer Basis 28 und zwei sich beiderseits der Basis 28 quer zu dieser erstreckenden und vorzugsweise parallel zueinander verlaufenden Seitenteilen 30a, b.

In einem der Basis abgewandten Bereich der Seitenteile 30a, b sind diese, wie in Fig. 2 dargestellt, mit Ausschnitten 32 versehen, in welche ein Fixierelement 34 eingesetzt ist, welches ungefähr umgekehrt V-förmig ausgebildet ist und mit einem Spannbereich 36 an einer Oberseite 38 und einer dem jeweils anderen Dachrelingträger 16, in diesem Fall dem Dachrelingträger 16b, zugewandten inneren Längsseite 40 des jeweils einen Dachrelingträgers 16, in diesem Fall des Dachrelingträgers 16a, anliegt.

Ferner ist an dem Lagerkörper 26 ein bewegbares Fixierelement 42 gelagert, welches beim ersten Ausführungsbeispiel auf einer dem jeweils anderen Dachrelingträger 16, d. h. dem Dachrelingträger 16b, abgewandten Seite des jeweils einen Dachrelingträgers 16, d. h. des Dachrelingträgers 16a, angeordnet ist und einen Spannbereich 46 aufweist, mit welchem das bewegbare Fixierelement 42 an einer Unterseite 48 und einer äußeren Längsseite 50 des jeweiligen Dachrelingträgers 16, in diesem Fall des Dachrelingträgers 16a, anlegbar ist, so daß der zwischen den Spannbereichen 36 und 46 der Fixierelemente 34 und 44 liegende Abschnitt des jeweiligen Dachrelingträgers 16 zwischen diesen Spannbereichen 36 und 46 fest einspannbar ist, um die Fixiereinrichtung 24 am jeweiligen Dachrelingträger 16 festzulegen.

Hierzu ist vorzugsweise das bewegbare Fixierelement 44 an einem Lagerbolzen 52, welcher sich zwischen den Seitenteilen 30a, 30b erstreckt, um eine Schwenkachse 54 verschwenkbar gelagert und weist einen krallenförmig gebogenen Bereich 56 auf, welcher mit einer den Spannbereich 46 bildenden Auflage 58 versehen ist.

Auf einer dem krallenförmig gebogenen Bereich 56 gegenüberliegenden Seite der Schwenkachse 54 weist das bewegbare Fixierelement 44 eine Angriffsstelle 60 für eine als Ganzes mit 62 bezeichnete Spanneinrichtung auf.

Vorzugsweise bildet dabei das bewegbare Fixierelement 44 bezogen auf die Schwenkachse 54 einen zweiarmigen Hebel, wobei ein Arm dieses Hebels zum krallenförmig gebogenen Bereich 56 und der andere Arm des Hebels zu der Angriffsstelle 60 der Spanneinrichtung 62 verläuft.

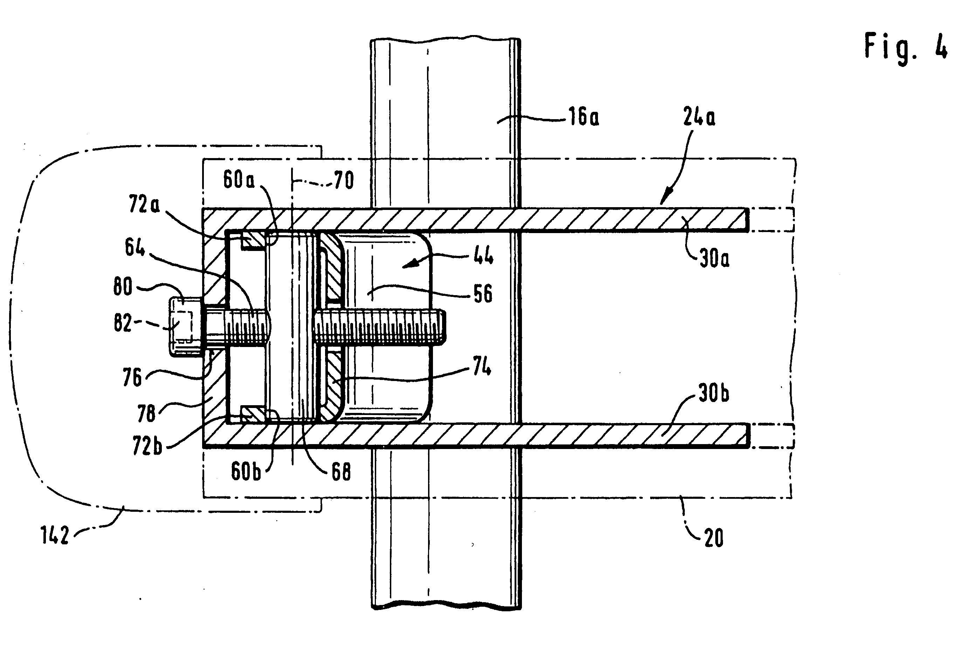

Die Spanneinrichtung 62 umfaßt, wie in Fig. 2 und 4 dargestellt, eine Spannspindel 64, im einfachsten Fall ausgebildet als Schraube, welche eine Gewindebohrung 66 eines damit als Spindelmutter wirksamen Bolzens 68 durchsetzt, der sich quer zur Spannspindel 64 erstreckt und um eine Achse 70 schwenkbar in den als Aufnahmebohrungen ausgebildeten Angriffsstellen 60a, 60b des beweglichen Fixierelements 44 gelagert ist.

Das bewegliche Fixierelement 44 ist vorzugsweise als U-förmig gebogenes Blechteil ausgebildet, welches mit seinen Seitenschenkeln 72a und 72b die Angriffsstellen 60a und 60b bildet und mit einem Mittelschenkel 74 den krallenförmig gebogenen Bereich 56 bildet.

Die Spannspindel 64 durchsetzt ihrerseits eine Bohrung 76 in einer an die Basis 28 des Lagerkörpers 26 angeformten Lasche 78 und liegt mit einem Spindelkopf 80 auf einer dem Bolzen 68 abgewandten Seite der Lasche 78 an, so daß mit der Spannspindel 64 auf den Bolzen 68 eine Zugwirkung ausgeübt werden kann, welche den die Angriffsstellen 60a, b aufnehmenden Arm des Fixierelements 44 in Richtung der Lasche 78 bewegt und somit den krallenförmig gebogenen Bereich 56 in Richtung des zwischen den Spannbereichen 36 und 46 liegenden Abschnitts des Dachrelingträgers 16 bewegt, um diesen Abschnitt des Dachrelingträgers 16 zwischen den Spannbereichen 36 und 46 einzuspannen. Hierzu ist der Spindelkopf 80 mit einer Aufnahme 82 versehen, mit welcher ein Werkzeug in Eingriff gebracht werden kann.

Die Aufnahme 82 und der Spindelkopf 80 liegen dabei an einer dem jeweils anderen Dachrelingträger 16, in diesem Fall dem Dachrelingträger 16b, abgewandten Außenseite 84 der Fixiereinrichtung 24 und sind somit von der Fahrzeuglängsseite her zugänglich, welcher der jeweilige Dachrelingträger 16, in diesem Fall der Dachrelingträger 16a, zugeordnet ist.

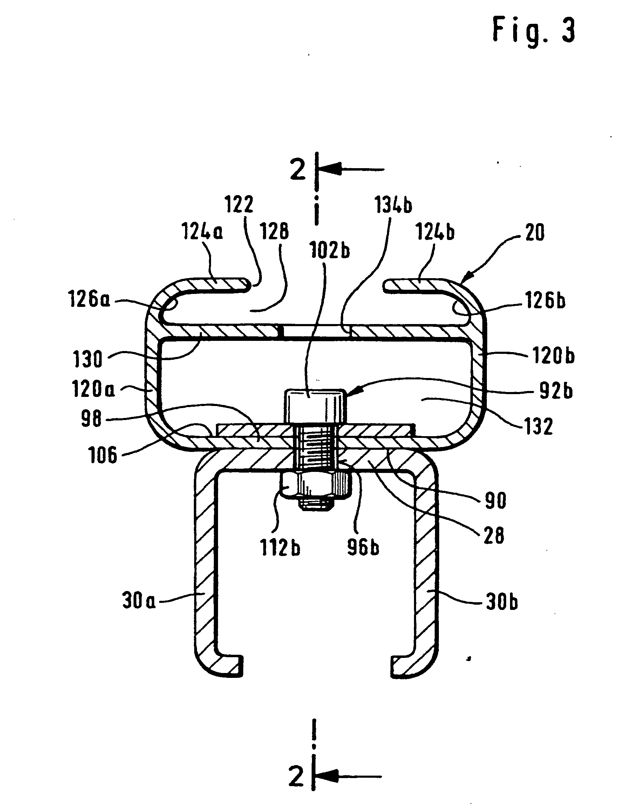

Die gesamte Fixiereinrichtung 24 liegt, wie in Fig. 2 und 3 dargestellt, mit der Basis 28 an einer dem Fahrzeugdach 14 zugewandten Unterseite 90 des Querträgers 20 an, so daß sich der Querträger 20 mit der Unterseite 90 auf der Basis 28 des Lagerkörpers 26 abstützt.

Eine Verbindung zwischen der Basis 28 und dem Querträger 20 erfolgt über als Schrauben ausgebildete Halteelemente 92a und 92b, welche in Längsrichtung 94 des Querträgers 20 verlaufende Längsschlitze 96a, 96b in einer die Unterseite 90 bildenden Bodenwand 98 des Querträgers 20 durchsetzen, wobei die Schrauben 92a, 92b vorzugsweise mit ihren Schraubenköpfen 102a, 102b auf einer Einlage 104 aufliegen, die ihrerseits auf einer der Unterseite 90 gegenüberliegenden Innenseite 106 der Bodenwand 98 aufliegt und entsprechend den Längsschlitzen 96a, 96b geformte und mit diesen deckungsgleich angeordnete Längsschlitze 108a, 108b aufweist.

Ferner durchsetzen die Schrauben 102a, 102b Bohrungen 110a, 110b in der Basis 28 und sind in Muttern 112a, 112b einschraubbar, welche auf einer der Bodenwand 98 gegenüberliegenden Seite der Basis 28 angeordnet sind und sich auf der Basis 28 abstützen.

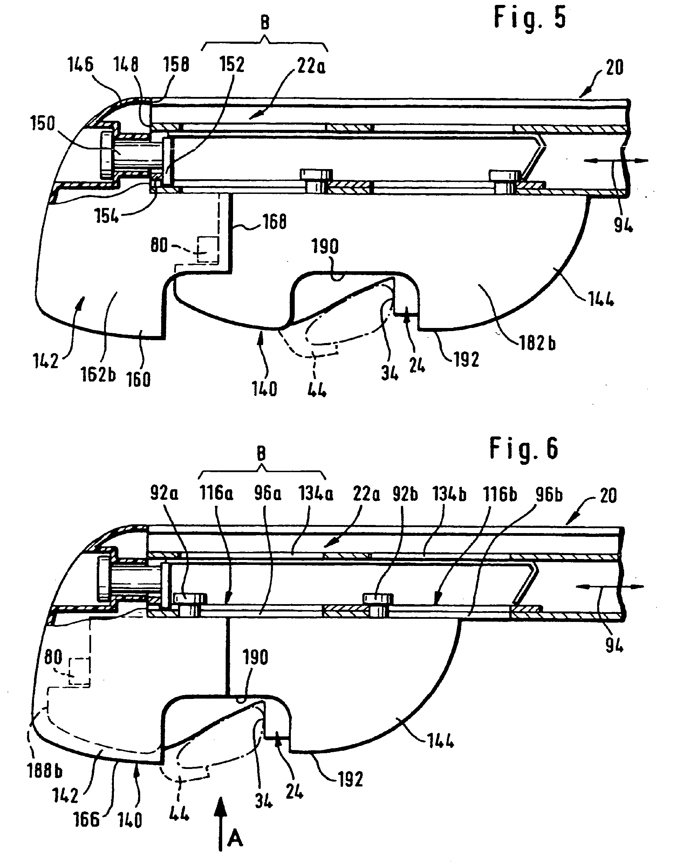

Durch die Längsschlitze 96a, b und 108a, b besteht die Möglichkeit, die Schrauben 92a, b in der Längsrichtung 94 des Querträgers 20 relativ zu diesem in verschiedene Längspositionen zu verschieben, wobei eine maximal innenliegende Längsposition der Fixiereinrichtung 24 in Fig. 5 dargestellt ist und eine maximal außenliegende Längsposition der Fixiereinrichtung 24 in Fig. 6 dargestellt ist. In Fig. 5 und 6 ist dabei erkennbar, daß ein Bereich B möglicher Längspositionen der Fixiereinrichtung 24 relativ zum jeweiligen Endbereich 22, d. h. in diesem Fall zum Endbereich 22a des Querträgers 20, durch die maximale Erstreckung der Längsschlitze 96a, b und 108a, b in der Längsrichtung 94 des Querträgers 20 bestimmt ist. Innerhalb des Bereichs B sind dabei bei gelösten Schrauben 92a, b beliebige Längspositionen der Fixiereinrichtung 24 relativ zum Endbereich 22 stufenlos wählbar und durch Festziehen der Schrauben 92a, b fixierbar.

Dabei bilden die Längsschlitze 96a, b zusammen mit den Schrauben 92a, b Längsführungen 116a, b für die Bewegung der Fixiereinrichtung 24 relativ zum Endbereich 22 des Querträgers 20 in dessen Längsrichtung 94, während die Festlegung der Fixiereinrichtung 24 relativ zum Endbereich 22 in der Längsrichtung 94 kraftschlüssig durch die Schrauben 92a, b erfolgt.

Der Querträger 20 wird vorzugsweise durch ein Profilrohr gebildet, welches neben der Bodenwand 98 Seitenwände 120a, 120b aufweist, die in aufeinanderzu verlaufende und eine sich in der Längsrichtung 94 erstreckende obere Längsöffnung 122 des Querträgers 20 zwischen sich einschließende Randleisten 124a, 124b übergehen, welche so geformt sind, daß sich im Anschluß an die Längsöffnung 122 und innerhalb des Querträgers 20 ein an die Längsöffnung 122 angrenzender Nutraum 128 mit Hinterschneidungen 126a, 126b bildet, so daß in den Nutraum 128 in die Hinterschneidungen 126a, b eingreifende und von den Randleisten 124 gegen ein Herausbewegen aus dem Nutraum 128 gesicherte Nutensteine ähnlich einer T-Nut einsetzbar sind.

Der Nutraum 128 erstreckt sich ausgehend von der Längsöffnung 122 nicht bis zur Bodenwand 98, sondern lediglich bis zu einer Zwischenwand 130, welche zwischen den Seitenwänden 120a, 120b verläuft und somit in dem Profilrohr des Querträgers 20 einen zwischen der Zwischenwand 130 und der Bodenwand 98 liegenden Hohlraum 132 bildet, in welchem die Einlage 104 und die Schraubenköpfe 102 angeordnet sind.

Um Zugang zu den Schraubenköpfen 102 zu haben, ist die Zwischenwand 130 ebenfalls mit Längsschlitzen 134a, 134b versehen, die so angeordnet sind, daß durch diese Längsschlitze 134a, 134b hindurch ein Zugang zu den Schraubenköpfen 102a, b über die Längsöffnung 122 und durch die Zwischenwand 130 hindurch gewährleistet ist, um mit einem Werkzeug die Schrauben 92a, b lösen oder festziehen zu können.

Um die Fixiereinrichtung 24 gegen Schmutz zu schützen und um dem Dachlastenträger 10 in den Bereichen, in denen die Fixiereinrichtungen 24 angeordnet sind, ein gefälliges Aussehen zu vermitteln, ist im Bereich jeder der Fixiereinrichtungen 24, wie in Fig. 5 und Fig. 6 dargestellt, eine Abdeckung 140 vorgesehen, welche ein fest mit dem jeweiligen Endbereich 22 des Querträgers 20 verbundenes erstes Abdeckteil 142 und ein zweites, fest mit der jeweiligen Fixiereinrichtung 24 verbundenes zweites Abdeckteil 144 aufweist.

Das erste Abdeckteil 142 schließt seinerseits mit einem oberen Bereich 146 unmittelbar an eine Stirnseite 148 des Querträgers 20 an und überdeckt diese vollständig, so daß der obere Bereich 146 sowohl den Nutraum 128 als auch den Hohlraum 132 des Querträgers 20 an der Stirnseite 148 verschließt, wenn das erste Abdeckteil 142 an dem Querträger 20 gehalten ist.

Hierzu ist eine den oberen Bereich 146 durchsetzendes Einsteckschloß 150 in dem oberen Bereich 146 vorgesehen, das derart angeordnet ist, daß dieses in der Lage ist, mit einem Riegel 152 in den Hohlraum 132 des Querträgers 20 einzugreifen und eine in dem Hohlraum vorgesehene und fest mit dem Querträger 20 verbundene Riegelnase 154 zu hintergreifen, so daß das Einsteckschloß 150 bei die Riegelnase 154 hintergreifendem Riegel 152 das erste Abdeckteil 142 an dem Querträger 20 fixiert hält, wobei die exakte Ausrichtung des ersten Abdeckteils 142 relativ zum Querträger 20 einerseits durch eine an der Stirnseite 148 anliegende Anlagefläche 158 des oberen Bereichs 146 sowie durch das in den Hohlraum 132 eingreifende Einsteckschloß 150 mit dem Riegel 152 erfolgt.

Durch drehen des Riegels 152 besteht jedoch die Möglichkeit, das erste Abdeckteil 142 von dem Querträger 20 zu lösen und als Ganzes mitsamt dem Einsteckschloß 150 vom Querträger 20 abzunehmen.

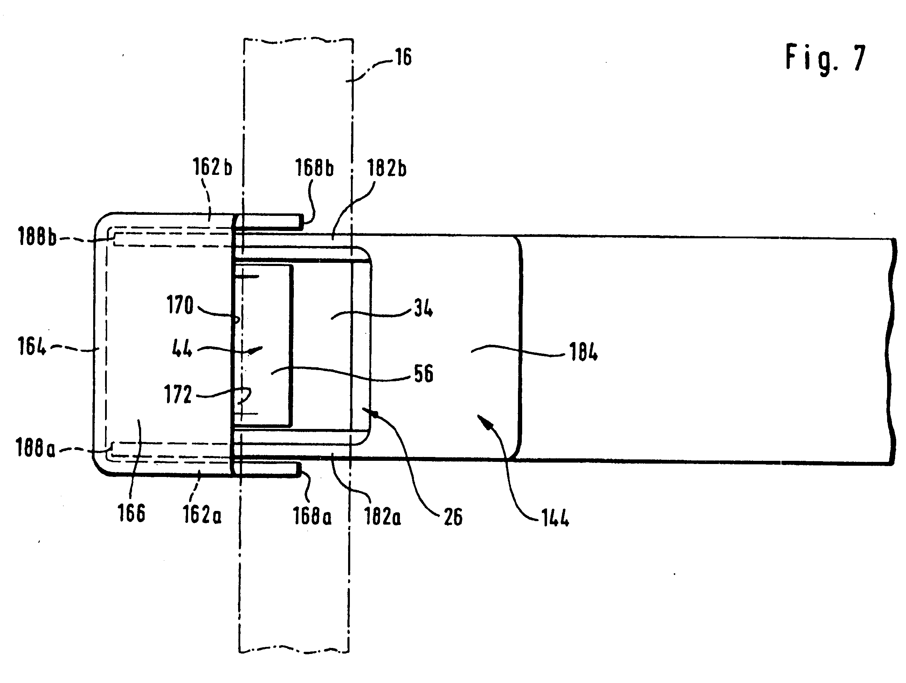

Das erste Abdeckteil 142 umfaßt ferner einen sich an den oberen Bereich 146 anschließenden unteren Bereich 160, welcher, wie in Fig. 5, 6 und 7 dargestellt, zwei Seitenwände 162a, 162b, eine Stirnwand 164 sowie eine untere, dem Fahrzeugdach 14 zugewandte Wand 166 aufweist. Die Seitenwände 162a und 162b des unteren Bereichs 160 erstrecken sich dabei im Gegensatz zum oberen Bereich 146 nicht nur bis zur Stirnseite 148 des Querträgers 20, sondern auch noch weiter entlang des Querträgers 20 im Endbereich 22 bis zu einer der Stirnwand 164 abgewandten Innenkontur 168 der Seitenwände 162a, 162b, wobei die Innenkontur 168a, 168b zusammen mit einer ebenfalls der Stirnwand 164 abgewandten Innenkante 170 der unteren Wand 166 eine Öffnung 172 einer Haube bilden, die ihrerseits durch den unteren Bereich 160 mit seiner unteren Wand 166, den Seitenwänden 162a, 162b und der Stirnwand 164 gebildet wird.

Die durch den unteren Bereich 160 gebildete Haube erstreckt sich dabei in Richtung der Fixiereinrichtung 24 so weit, daß die Fixiereinrichtung 24 mit ihrer Außenseite 84 so weit in die Öffnung 172 eintaucht, daß der als Haube ausgebildete untere Bereich 160 einen Zugriff auf den an der Außenseite 84 angeordneten Spindelkopf 80 sowie die Aufnahme 82 desselben selbst in der maximal innenliegenden Längsposition der Fixiereinrichtung 24 verhindert, wie dies in Fig. 5 dargestellt ist. Wird die Fixiereinrichtung 24 in Längspositionen verschoben, die näher an der maximal außenliegenden Längsposition, dargestellt in Fig. 6, liegen, so taucht die Außenseite 84 der Fixiereinrichtung 24 immer mehr in den als Haube ausgebildeten unteren Bereich 160 ein, so daß in diesen Längspositionen in jedem Fall auch ein Zugriff auf den Spindelkopf 80 und die Aufnahme 82 desselben unmöglich ist.

Das zweite Abdeckteil 144 ist, wie ebenfalls in Fig. 5 bis 7 dargestellt, fest mit dem Lagerkörper 26 verbunden und gemeinsam mit diesem und der Fixiereinrichtung 24 relativ zum Querträger 20 verschiebbar.

Das zweite Abdeckteil 144 weist dabei ebenfalls Seitenwände 182a und 182b auf, die längs der Seitenteile 30a und 30b verlaufen und diese auf ihrer Außenseite überdecken, sowie eine untere Wand 184, welche von dem Querträger 20 bis nahe an das fest an dem Lagerkörper 26 angeordnete Fixierelement 34 verläuft und den Lagerkörper 26 ausgehend von einem innenliegenden Ende 186 im wesentlichen bis zum Fixierelement 34 übergreift und abdeckt, jedoch im Abstand von dem im Fixierelement 34 liegenden Abschnitt des Dachrelingträgers 16 endet.

Die Seitenwände 182a, b erstrecken sich dabei so weit in Richtung des ersten Abdeckteils 142, daß diese, wie in Fig. 5 dargestellt, selbst in der maximal innenliegenden Stellung der Fixiereinrichtung 24 über die Öffnung 170 in den als Haube ausgebildeten unteren Bereich 160 des ersten Abdeckteils 142 eingreifen und dabei teleskopartig mit dem ersten Abdeckteil 142 zusammenwirken, wobei die Seitenwände 162a, b des unteren Bereichs 160 des ersten Abdeckteils 142 an einer Außenseite der Seitenwände 182a, b des zweiten Abdeckteils 144 anliegen und somit insgesamt die Seitenwände 162a, b und die Seitenwände 182a, b teleskopartig aneinander geführt sind.

Mit zunehmender Verschiebung der Fixiereinrichtung 24 in Richtung der maximal außenliegenden Längsposition, welche in Fig. 6 dargestellt ist, tauchen die Seitenwände 182a, 182b zunehmend in den als Haube ausgebildeten unteren Bereich 160 des ersten Abdeckteils 142 ein, bis diese mit ihrer der Stirnwand 164 des unteren Bereichs 160 zugewandten Endkontur 188a, b nahezu an der Stirnwand 164 anliegen.

Die Seitenwände 182a, b des zweiten Abdeckteils 144 weisen ferner noch im Bereich der Fixierelemente 34, 44 einen Ausschnitt 190 auf, welcher es erlaubt, die Seitenwände 182a, 182b mit ihrer Unterkante 192 so weit in Richtung des Fahrzeugdachs 14 zu ziehen, daß sämtliche in Seitenansicht erkennbaren Elemente der Fixiereinrichtung 24 bis auf das Fixierelement 34 und den Spannbereich 46 des Fixierelements 44 durch die Seitenwände 182a, 182b im wesentlichen abgedeckt sind. Dabei verläuft die Unterkante 192 der Seitenwände 182a, 182b jedoch nur so, daß die Seitenwände 182a, 182b nicht mit der unteren Wand 166 des unteren Bereichs 160 des ersten Abdeckteils 142 kollidieren und damit in den als Haube ausgebildeten unteren Bereich 160 einschiebbar sind.

Das zweite Abdeckteil 144 dient somit primär dazu, die Fixiereinrichtung 24 zumindest insoweit, als diese über das erste Abdeckteil 142 in der jeweiligen Längsposition übersteht, gegen Verschmutzung zu schützen und dieser darüber hinaus in Kombination mit dem ersten Abdeckteil 142 ein optisch gefälliges Aussehen zu vermitteln.

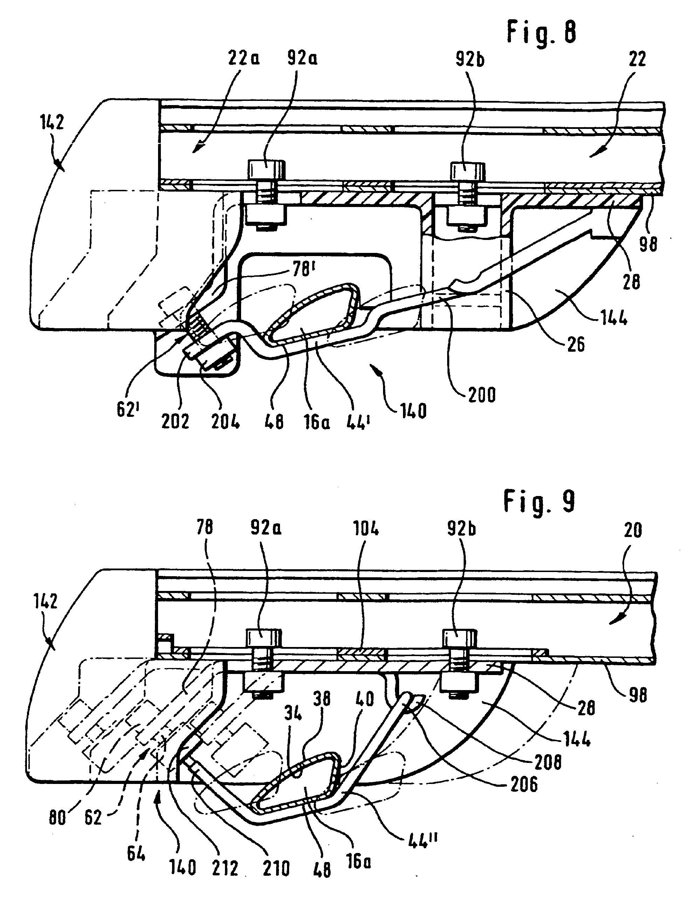

Bei einem zweiten Ausführungsbeispiel eines erfindungsgemäßen Dachlastenträgers, dargestellt in Fig. 8, sind diejenigen Teile, die mit denen des ersten Ausführungsbeispiels identisch sind, mit denselben Bezugszeichen versehen, so daß vollinhaltlich auf die Ausführungen hierzu Bezug genommen werden kann.

Im Gegensatz zum ersten Ausführungsbeispiel ist bei dem zweiten Ausführungsbeispiel das bewegbare Fixierelement 44' als Bügel ausgebildet, welcher einerseits mit einer Lagerseite 200 auf einer dem anderen Dachrelingträger 16, in diesem Fall dem Dachrelingträger 16b, zugewandten Seite des jeweiligen Dachrelingträgers 16 gelagert ist, den jeweiligen Dachrelingträger 16, in diesem Fall den Dachrelingträger 16a, untergreift und mit einer Spannseite 202, die auf einer der Lagerseite 200 abgewandten Seite des Dachrelingträgers 16 angeordnet ist, von der Spanneinrichtung 62' beaufschlagbar ist, wobei die Spanneinrichtung 62' im einfachsten Fall eine Spannschraube umfaßt, die in eine an der Spannseite 202 des bewegbaren Fixierelements 44' angeordnete Mutter 204 einschraubbar ist, um die Spannseite 202 gegen die Lasche 78' des Lagerkörpers 26 zu bewegen und somit den jeweiligen Dachrelingträger 16, in diesem Fall den Dachrelingträger 16a, auf der Unterseite 48 zu beaufschlagen.

Im übrigen ist das zweite Ausführungsbeispiel in gleicher Weise ausgebildet wie das erste Ausführungsbeispiel, so daß auf die Ausführungen zum ersten Ausführungsbeispiel vollinhaltlich Bezug genommen werden kann.

Bei einem dritten Ausführungsbeispiel eines erfindungsgemäßen Dachlastenträgers, dargestellt in Fig. 9, sind diejenigen Teile, die mit denen des ersten und zweiten Ausführungsbeispiels identisch sind, mit denselben Bezugszeichen versehen, so daß hinsichtlich auch der Beschreibung derselben vollinhaltlich auf die Ausführungen zum ersten und zweiten Ausführungsbeispiel Bezug genommen werden kann.

Im Gegensatz zum ersten und zweiten Ausführungsbeispiel ist das bewegbare Fixierelement 44" als Teil aus biegeschlaffem Material, beispielsweise als Band ausgebildet, welches Ende 206 in einen an der Basis 28 angeformten Haken 208 einhängbar ist und sich den jeweiligen Dachrelingträger 16, in diesem Fall den Dachrelingträger 16a, auf einer Unterseite 48 Spanneinrichtung 62 erstreckt, wobei in diesem Fall ein Ende 210 des Fixierelements 44' eine Mutter 212 trägt, in welche die Spannspindel 64 der Spanneinrichtung 62 einschraubbar ist, um das Fixierelement 44' gegen die Unterseite 48 des Dachrelingträgers 16 zu verspannen und gleichzeitig das an dem Lagerkörper 26 gehaltene Fixierelement 34 in bekannter Weise gegen die Oberseite 38 und die innere Längsseite 40 des Dachrelingträgers 16 zu pressen.

## Patentansprüche

1. Dachlastenträger für ein Dachrelingsystem (12), welches auf gegenüberliegenden Seiten eines Fahrzeugdachs (14) angeordnete Dachrelingträger (16) aufweist, umfassend mindestens einen sich von einem Dachrelingträger (16a) zum anderen Dachrelingträger (16b) erstreckenden Querträger (20) und an beiden einander gegenüberliegenden Endbereichen (22a, b) des Querträgers (20) angeordnete Fixiereinrichtungen (24a, b), von denen jede mittels einer Spanneinrichtung (62) relativ zueinander bewegbare und am jeweiligen Dachrelingträger (16a, b) festspannbare Fixierelemente (34, 44) aufweist, und von denen jede an einer Seite des Querträgers (20) an diesem so angeordnet sind, dass die Fixiereinrichtungen (24a, b) gegenüber dem Querträger (20) in Richtung seiner Längsrichtung (94) zwischen innerhalb eines festgelegten Bereichs (B) liegenden Längspositionen verschiebbar und festlegbar sind, und ein an jeder der Fixiereinrichtungen (24a, b) gehaltenes zweites Abdeckteil (144),
**dadurch gekennzeichnet, dass** an jedem Endbereich (22a, b) des Querträgers (20) ein erstes Abdeckteil (142) einer die jeweilige Fixiereinrichtung, (24a, b) zumindest teilweise abdeckenden Abdeckung (140) gehalten ist, und dass das erste Abdeckteil (142) mit dem zweiten, an der entsprechenden Fixiereinrichtung (24a, b) gehaltenen Abdeckteil (144) durch wechselseitige teilweise Überdeckung so zusammenwirkt, dass eine die Fixiereinrichtung (24a, b) im wesentlichen übergreifende Abdeckung (140) entsteht.

2. Dachlastenträger nach Anspruch 1, **dadurch gekennzeichnet, dass** die Fixiereinrichtungen (24a, b) relativ zum Querträger (20) in einer Längsführung (116a, 116b) geführt zwischen den innerhalb des festgelegten Bereichs (B) liegenden Längspositionen verschiebbar sind.

3. Dachlastenträger nach Anspruch 1 oder 2, **dadurch gekennzeichnet, dass** die Fixiereinrichtungen (24a, b) gegenüber dem Querträger (20) stufenlos in verschiedene, innerhalb des Bereichs (B) liegende Längspositionen verschiebbar und in jeder Längsposition gegenüber dem Querträger (20) festlegbar sind.

4. Dachlastenträger nach einem der voranstehenden Ansprüche, **dadurch gekennzeichnet, dass** die Fixiereinrichtungen (24a, b) in der Längsrichtung (94) kraftschlüssig am Querträger (20) festlegbar sind.

5. Dachlastenträger nach einem der voranstehenden Ansprüche, **dadurch gekennzeichnet, dass** die Fixiereinrichtungen (24a, b) durch den Querträger (20) durchsetzende Halteelemente (92a, b) am Querträger (20) gehalten sind.

6. Dachlastenträger nach Anspruch 5, **dadurch gekennzeichnet, dass** die Halteelemente (92a, b) als Spannelemente ausgebildet sind.

7. Dachlastenträger nach Anspruch 6, **dadurch gekennzeichnet, dass** die Halteelemente (92a, b) in Längsführungselementen (96a, b) der Längsführungen (116a, b) geführt sind.

8. Dachlastenträger nach einem der voranstehenden Ansprüche, **dadurch gekennzeichnet, dass** das erste Abdeckteil (142) eine Stirnseite (148) des Querträgers (20) überdeckt.

9. Dachlastenträger nach einem der voranstehenden Ansprüche, **dadurch gekennzeichnet, dass** das erste Abdeckteil (142) in jeder Längsposition der entsprechenden Fixiereinrichtung (24a, b) eine Betätigung der Spanneinrichtung (62) dieser Fixiereinrichtung (24a, b) verhindert.

10. Dachlastenträger nach Anspruch 9, **dadurch gekennzeichnet, dass** das erste Abdeckteil (142) so geformt und angeordnet ist, dass es in jeder Längsposition der entsprechenden Fixiereinrichtung (24a, b) ein Betätigungselement (80) der Spanneinrichtung (62) übergreift.

11. Dachlastenträger nach Anspruch 10, **dadurch gekennzeichnet, dass** das erste Abdeckteil (142) in jeder Längsposition der entsprechenden Fixiereinrichtung (24a, b) eine Seite (84) der Fixiereinrichtung (24a, b) übergreift, an welcher das Betätigungselement (80) der Spanneinrichtung (62) angeordnet ist.

12. Dachlastenträger nach einem der voranstehenden Ansprüche, **dadurch gekennzeichnet, dass** das erste und das zweite Abdeckteil (142, 144) teleskopartig zusammenwirken.

13. Dachlastenträger nach einem der voranstehenden Ansprüche, **dadurch gekennzeichnet, dass** die Abdeckung (140) die jeweilige Fixiereinrichtung (24a, b) in jeder Längsposition im wesentlichen übergreift.

14. Dachlastenträger nach einem der voranstehenden Ansprüche, **dadurch gekennzeichnet, dass** die Abdeckung (140) eine je nach Längsposition der Fixiereinrichtung (24a, b) variable Größe aufweist.

15. Dachlastenträger nach einem der voranstehenden Ansprüche, **dadurch gekennzeichnet, dass** das erste Abdeckteil (142) einen haubenförmigen Bereich (160) aufweist.

16. Dachlastenträger nach Anspruch 15, **dadurch gekennzeichnet, dass** in jeder Längsposition der Fixiereinrichtung (24a, b) das Betätigungselement (80) der Spanneinrichtung (62) von dem haubenförmigen Bereich (160) übergriffen ist.

17. Dachlastenträger nach einem der voranstehenden Ansprüche, **dadurch gekennzeichnet, dass** das erste Abdeckteil (142) lösbar an dem Querträger (20) gehalten ist.

18. Dachlastenträger nach Anspruch 17, **dadurch gekennzeichnet, dass** das erste Abdeckteil (142) mit einem Schloß (150) lösbar an dem Querträger (20) gehalten ist.

19. Dachlastenträger nach einem der voranstehenden Ansprüche, **dadurch gekennzeichnet, dass** die Spanneinrichtungen (62) der Fixiereinrichtungen (24a, b) außerhalb des Querträgers (20) angeordnet sind.

20. Dachlastenträger nach Anspruch 19, **dadurch gekennzeichnet, dass** die Spanneinrichtungen (62) zwischen Spannbereichen (36, 46) der Fixierelemente (34, 44) und dem Querträger (20) angeordnet sind.

21. Dachlastenträger nach Anspruch 19 oder 20, **dadurch gekennzeichnet, dass** die Fixiereinrichtungen (24a, b) vollständig außerhalb des Querträgers (20) liegen.

22. Dachlastenträger nach einem der voranstehenden Ansprüche, **dadurch gekennzeichnet, dass** die Fixiereinrichtungen (24a, b) jeweils einen Lagerkörper (26) aufweisen, der mit einer Basis (28) an dem Querträger (20) anliegt.

23. Dachlastenträger nach einem der voranstehenden Ansprüche, **dadurch gekennzeichnet, dass** die Fixiereinrichtungen (24a, b) ein feststehendes Fixierelement (34) und ein gegenüber diesem bewegbares Fixierelement (44) aufweisen.

24. Dachlastenträger nach Anspruch 23, **dadurch gekennzeichnet, dass** das feststehende Fixierelement (34) an dem Lagerkörper (26) der jeweiligen Fixiereinrichtung (24a, b) gehalten ist.

25. Dachlastenträger nach Anspruch 23 oder 24, **dadurch gekennzeichnet, dass** das bewegbare Fixierelement (44) an dem Lagerkörper (26) bewegbar gelagert ist.

26. Dachlastenträger nach Anspruch 25, **dadurch gekennzeichnet, dass** das bewegbare Fixierelement (44) beim Einspannen des jeweiligen Dachrelingträgers (16a, b) mit der Spanneinrichtung (62) relativ zu dem Lagerkörper (26) bewegbar ist.

27. Dachlastenträger nach Anspruch 25 oder 26, **dadurch gekennzeichnet, dass** das bewegbare Fixierelement (44) als Schwenkhebel ausgebildet ist, welcher gegenüber dem Lagerkörper (26) um eine Schwenkachse (54) verschwenkbar ist.

28. Dachlastenträger nach Anspruch 27, **dadurch gekennzeichnet, dass** das bewegbare Fixierelement (44) in eine Montagestellung bewegbar ist, in welcher die Fixierelemente (34, 44) auf den jeweiligen Dachrelingträger (16a, b) aufsetzbar sind, und von der Montagestellung mittels der Spanneinrichtung (62) in eine Spannstellung bewegbar ist.

## Claims

1. Roof rack for a roof rail system (12) having roof rail carriers (16) arranged on opposite sides of a vehicle roof (14), comprising at least one cross carrier (20) extending from one roof rail carrier (16a) to the other roof rail carrier (16b), and fixing devices (24a, b) arranged at both opposite end areas (22a, b) of the cross carrier (20), each of the fixing devices comprising fixing elements (34, 44) movable relative to one another and clampable on the respective roof rail carrier (16a, b) by a clamping device (62), and each of the fixing devices being arranged in such a way on the cross carrier (20) at one side thereof that the fixing devices (24a, b) are displaceable and fixable relative to the cross carrier (20) in the direction of its longitudinal direction (94) between longitudinal positions located within a defined area (B), and a second cover part (144) held on each of the fixing devices (24a, b),
**characterized in that** a first cover part (142) of a cover (140) covering the respective fixing device (24a, b) at least partially is held at each end area (22a, b) of the cross carrier (20), and **in that** the first cover part (142) cooperates with the second cover part (144) held on the corresponding fixing device (24a, b), by reciprocal partial covering, so as to produce a cover (140) engaging substantially over the fixing device (24a, b).

2. Roof rack in accordance with claim 1, **characterized in that** the fixing devices (24a, b), guided in a longitudinal guide (116a, 116b), are displaceable relative to the cross carrier (20) between the longitudinal positions located within the defined area (B).

3. Roof rack in accordance with claim 1 or 2, **characterized in that** the fixing devices (24a, b) are continuously displaceable relative to the cross carrier (20) into various longitudinal positions located within the area (B) and are fixable in each longitudinal position relative to the cross carrier (20).

4. Roof rack in accordance with any one of the preceding claims, **characterized in that** the fixing devices (24a, b) are fixable in the longitudinal direction (94) in a force-locked manner on the cross carrier (20).

5. Roof rack in accordance with any one of the preceding claims, **characterized in that** the fixing devices (24a, b) are held on the cross carrier (20) by holding elements (92a, b) passing through the cross carrier (20).

6. Roof rack in accordance with claim 5, **characterized in that** the holding elements (92a, b) are in the form of clamping elements.

7. Roof rack in accordance with claim 6, **characterized in that** the holding elements (92a, b) are guided in longitudinal guide elements (96a, b) of the longitudinal guides (116a, b).

8. Roof rack in accordance with any one of the preceding claims, **characterized in that** the first cover part (142) covers an end face (148) of the cross carrier (20).

9. Roof rack in accordance with any one of the preceding claims, **characterized in that** in each longitudinal position of the corresponding fixing device (24a, b), the first cover part (142) prevents actuation of the clamping device (62) of this fixing device (24a, b).

10. Roof rack in accordance with claim 9, **characterized in that** the first cover part (142) is shaped and arranged so as to engage over an actuating element (80) of the clamping device (62) in each longitudinal position of the corresponding fixing device (24a, b).

11. Roof rack in accordance with claim 10, **characterized in that** in each longitudinal position of the corresponding fixing device (24a, b), the first cover part (142) engages over a side (84) of the fixing device (24a, b), on which the actuating element (80) of the clamping device (62) is arranged.

12. Roof rack in accordance with any one of the preceding claims, **characterized in that** the first and second cover parts (142, 144) cooperate in the manner of a telescope.

13. Roof rack in accordance with any one of the preceding claims, **characterized in that** the cover (140) engages substantially over the respective fixing device (24a, b) in each longitudinal position.

14. Roof rack in accordance with any one of the preceding claims, **characterized in that** the cover (140) has a size which varies in dependence upon the longitudinal position of the fixing device (24a, b).

15. Roof rack in accordance with any one of the preceding claims, **characterized in that** the first cover part (142) has a hood-shaped portion (160).

16. Roof rack in accordance with claim 15, **characterized in that** in each longitudinal position of the fixing device (24a, b), the hood-shaped portion (160) engages over the actuating element (80) of the clamping device (62).

17. Roof rack in accordance with any one of the preceding claims, **characterized in that** the first cover part (142) is detachably held on the cross carrier (20).

18. Roof rack in accordance with claim 17, **characterized in that** the first cover part (142) is detachably held on the cross carrier (20) by a lock (150).

19. Roof rack in accordance with any one of the preceding claims, **characterized in that** the clamping devices (62) of the fixing devices (24a, b) are arranged outside of the cross carrier (20).

20. Roof rack in accordance with claim 19, **characterized in that** the clamping devices (62) are arranged between clamping areas (36, 46) of the fixing elements (34, 44) and the cross carrier (20).

21. Roof rack in accordance with claim 19 or 20, **characterized in that** the fixing devices (24a, b) are located completely outside of the cross carrier (20).

22. Roof rack in accordance with any one of the preceding claims, **characterized in that** the fixing devices (24a, b) each have a bearing member (26) which rests with a base (28) on the cross carrier (20).

23. Roof rack in accordance with any one of the preceding claims, **characterized in that** the fixing devices (24a, b) comprise a stationary fixing element (34) and a fixing element (44) movable relative to the latter.

24. Roof rack in accordance with claim 23, **characterized in that** the stationary fixing element (34) is held on the bearing member (26) of the respective fixing device (24a, b).

25. Roof rack in accordance with claim 23 or 24, **characterized in that** the movable fixing element (44) is movably mounted on the bearing member (26).

26. Roof rack in accordance with claim 25, **characterized in that** the movable fixing element (44) is movable relative to the bearing member (26) while clamping the respective roof rail carrier (16a, b) with the clamping device (62).

27. Roof rack in accordance with claim 25 or 26, **characterized in that** the movable fixing element (44) is in the form of a pivoted lever which is pivotable about a pivot axis (54) relative to the bearing member (26).

28. Roof rack in accordance with claim 27, **characterized in that** the movable fixing element (44) is movable into an assembly position in which the fixing elements (34, 44) are positionable on the respective roof rail carrier (16a, b), and is movable from the assembly position to a clamped position by means of the clamping device (62).

## Revendications

1. Porte-bagages de toit destiné à un système de barres de toit (12) comprenant des supports de barres de toit (16) sur des côtés se trouvant face à face d'un toit de véhicule (14) comportant au moins une traverse (20) s'étendant d'un support de barres de toit (16a) vers l'autre support de barres de toit (16b) et des dispositifs de fixation (24a, b) prévus dans les deux zones d'extrémité (22a, b) se trouvant face à face de la traverse (20), lesdits dispositifs de fixation comportant chacun des éléments de fixation (34, 44) déplaçables l'un par rapport à l'autre au moyen d'un dispositif de serrage (62) et fixables sur le support de barres de toit (16a, b) respectif à l'aide dudit dispositif de serrage, lesdits éléments de fixation respectifs étant disposés sur un côté de la traverse (20) de telle sorte que les dispositifs de fixation (24a, b) sont déplaçables et fixables par rapport à la traverse (20) en direction de sa direction longitudinale (94), entre des positions longitudinales fixées dans une zone définie (B), comportant par ailleurs un deuxième élément de recouvrement (144) fixé sur chacun des dispositifs de fixation (24a, b), **caractérisé en ce que** sur chacune des zones d'extrémité (22a, b) de la traverse (20) est maintenu un premier élément de recouvrement (142) d'un recouvrement (140) recouvrant au moins partiellement le dispositif de fixation (24a, b) respectif, et **en ce que** le premier élément de recouvrement (142) agit conjointement avec le deuxième élément de recouvrement (144) maintenu sur le dispositif de fixation (24a, b) respectif, par recouvrement partiel réciproque, de telle sorte que l'on obtient un recouvrement (140) recouvrant ledit dispositif de fixation (24a, b) essentiellement, par chevauchement.

2. Porte-bagages de toit selon la revendication 1, **caractérisé en ce que** les dispositifs de fixation (24a, b) sont guidés dans un guidage longitudinal (116a, 116b) par rapport à la traverse (20) et déplaçables entre les positions longitudinales fixées au sein de la zone définie (B).

3. Porte-bagages de toit selon la revendication 1 ou 2, **caractérisé en ce que** les dispositifs de fixation (24a, b) sont déplaçables de manière progressive par rapport à la traverse (20) dans différentes positions longitudinales se trouvant dans la zone (B) et fixables dans chaque position longitudinale par rapport à ladite traverse (20).

4. Porte-bagages de toit selon l'une quelconque des revendications précédentes, **caractérisé en ce que** les dispositifs de fixation (24a, b) sont fixables en direction longitudinale (94) par complémentarité à force sur la traverse (20).

5. Porte-bagages de toit selon l'une quelconque des revendications précédentes, **caractérisé en ce que** les dispositifs de fixation (24a, b) sont maintenus sur la traverse (20) au moyen d'éléments d'arrêt (92a, b) passant par ladite traverse (20).

6. Porte-bagages de toit selon la revendication 5, **caractérisé en ce que** les éléments d'arrêt (92a, b) sont des éléments de serrage.

7. Porte-bagages de toit selon la revendication 6, **caractérisé en ce que** les éléments d'arrêt (92a, b) sont guidés dans des éléments de guidage longitudinal (96a, b) des guidages longitudinaux (116a, b).

8. Porte-bagages de toit selon l'une quelconque des revendications précédentes, **caractérisé en ce que** le premier élément de recouvrement (142) recouvre un côté frontal (148) de la traverse (20).

9. Porte-bagages de toit selon l'une quelconque des revendications précédentes, **caractérisé en ce que** le premier élément de recouvrement (142) empêche dans chaque position longitudinale du dispositif de fixation respectif (24a, b) une mise en action du dispositif de serrage (62) dudit dispositif de fixation (24a, b).

10. Porte-bagages de toit selon la revendication 9, **caractérisé en ce que** le premier élément de recouvrement (142) est formé et disposé de telle sorte qu'il recouvre un élément de commande (80) du dispositif de serrage (62) dans chaque position longitudinale du dispositif de fixation correspondant (24a, b).

11. Porte-bagages de toit selon la revendication 10, **caractérisé en ce que** le premier élément de recouvrement (142) recouvre en toute position longitudinale du dispositif de fixation respectif (24a, b) un côté (84) dudit dispositif de fixation (24a, b) auquel est disposé l'élément de commande (80) du dispositif de serrage (62).

12. Porte-bagages de toit selon l'une quelconque des revendications précédentes, **caractérisé en ce que** le premier élément de recouvrement et le deuxième élément de recouvrement (142, 144) agissent conjointement de manière télescopique.

13. Porte-bagages de toit selon l'une quelconque des revendications précédentes, **caractérisé en ce que** le recouvrement (140) recouvre essentiellement le dispositif de fixation respectif (24a, b) dans chaque position longitudinale.

14. Porte-bagages de toit selon l'une quelconque des revendications précédentes, **caractérisé en ce que** le recouvrement (140) comporte une grandeur qui varie en fonction de la position longitudinale du dispositif de fixation (24a, b).

15. Porte-bagages de toit selon l'une quelconque des revendications précédentes, **caractérisé en ce que** le premier élément de recouvrement (142) comporte une zone (160) en forme de capot.

16. Porte-bagages de toit selon la revendication 15, **caractérisé en ce que** l'élément de commande (80) du dispositif de serrage (62) est recouvert par la zone en forme de capot (160) dans chaque position longitudinale du dispositif de fixation (24a, b).

17. Porte-bagages de toit selon l'une quelconque des revendications précédentes, **caractérisé en ce que** le premier élément de recouvrement (142) est maintenu de manière dissociable à la traverse (20).

18. Porte-bagages de toit selon la revendication 17, **caractérisé en ce que** le le premier élément de recouvrement (142) est maintenu de manière dissociable à la traverse (20) au moyen d'une serrure (150).

19. Porte-bagages de toit selon l'une quelconque des revendications précédentes, **caractérisé en ce que** les dispositifs de serrage (62) des dispositifs de fixation (24a, b) sont disposés à l'extérieur de la traverse (20).

20. Porte-bagages de toit selon la revendication 19, **caractérisé en ce que** les dispositifs de serrage (62) sont disposés entre des zones de serrage (36, 46) des éléments de fixation (34, 44) et la traverse (20).

21. Porte-bagages de toit selon la revendication 19 ou 20, **caractérisé en ce que** les dispositifs de fixation (24a, b) se trouvent intégralement à l'extérieur de la traverse (20).

22. Porte-bagages de toit selon l'une quelconque des revendications précédentes, **caractérisé en ce que** les dispositifs de fixation (24a, b) comportent chacun un corps d'appui (26) épousant la traverse (20) avec une base (28).

23. Porte-bagages de toit selon l'une quelconque des revendications précédentes, **caractérisé en ce que** les dispositifs de fixation (24a, b) comportent un élément de fixation fixe (34') et un élément de fixation mobile (44) disposé par rapport à ce dernier.

24. Porte-bagages de toit selon la revendication 23, **caractérisé en ce que** l'élément de fixation fixe (34) est maintenu sur le corps d'appui (26) du dispositif de fixation respectif (24a, b).

25. Porte-bagages de toit selon la revendication 23 ou 24, **caractérisé en ce que** l'élément de fixation mobile (44) est monté de manière mobile sur le corps d'appui (26).

26. Porte-bagages de toit selon la revendication 25, **caractérisé en ce que** l'élément de fixation mobile (44) est mobile par rapport au corps d'appui (26), lors du serrage du support de barres de toit respectif (16a, b) à l'aide du dispositif de serrage (62).

27. Porte-bagages de toit selon la revendication 25 ou 26, **caractérisé en ce que** l'élément de fixation mobile (44) est configuré comme levier orientable pouvant être pivoté autour d'un axe de pivotement (54) par rapport au corps d'appui (26).

28. Porte-bagages de toit selon la revendication 27, **caractérisé en ce que** l'élément de fixation mobile (44) peut être déplacé dans une position de montage où les éléments de fixation (34, 44) peuvent être installés sur le support de barres de toit respectif (16a, b), et déplacé depuis la position de montage dans une position de serrage à l'aide du dispositif de serrage (62).
